# EUROPEAN PATENT SPECIFICATION

(11) **EP 4 471 087 B1**
(45) Date of publication and mention of the grant of the patent: **05.11.2025**
(21) Application number: 24165413.6
(22) Date of filing: 22.03.2024
(51) Int. Cl.: C08L 67/02, C08L 53/02, C08G 59/22, C08G 59/24

(54) **POLYESTER RESIN COMPOSITION AND MOLDED ARTICLE FOR CAPACITOR HOUSING MANUFACTURED USING THE SAME**
POLYESTERHARZZUSAMMENSETZUNG UND DARAUS HERGESTELLTER FORMARTIKEL FÜR EIN KONDENSATORGEHÄUSE
COMPOSITION DE RÉSINE DE POLYESTER ET ARTICLE MOULÉ POUR BOÎTIER DE CONDENSATEUR FABRIQUÉ À L'AIDE DE CELLE-CI

(30) Priority: 31.05.2023 KR 20230069690
(43) Date of publication of application: 04.12.2024
(73) Proprietor: Hyundai Mobis Co., Ltd., Gangnam-gu Seoul 06141 (KR); HYUNDAI Advanced Materials Co., Ltd., Hwaseong-si, Gyeonggi-do 18633 (KR)
(72) Inventor: KANG, Hyoung Taek, 16891 Yongin-si, Gyeonggi-do (KR); LEE, Eun Chang, 16891 Yongin-si, Gyeonggi-do (KR); LEE, Sang Gil, 18605 Hwaseong-si, Gyeonggi-do (KR); HWANG, Sang Woon, 18605 Hwaseong-si, Gyeonggi-do (KR); KIM, Dong Ju, 16631 Suwon-si, Gyeonggi-do (KR); SONG, Jae Ho, 08596 Seoul (KR)
(74) Representative: Frenkel, Matthias Alexander

(56) References cited:
- US-A- 5 712 336
- US-A1- 2012 329 910

## Description

### BACKGROUND

### 1. Field of the Invention

The present disclosure relates to a polyester resin composition and a molded article for capacitor housing, which is manufactured using the same, and more specifically, to a polyester resin composition that has excellent adhesion to an epoxy potting material and can simultaneously satisfy dimensional stability and hydrolysis resistance, and a molded article for capacitor housing, which is manufactured using the polyester resin composition.

### 2. Discussion of Related Art

A DC capacitor is a key part of an H(E)PCU module and is a part that removes pulsation of DC voltage (has a smoothing function). Conventionally, capacitor housing materials have been manufactured by mixing polyphenylene sulfide (PPS)-based resin with a high content of filler, but there have been attempts to manufacture replacement products with more economical polyester resin.

In this context, US 5,712,336 discloses flameproofed thermoplastic molding materials which contain a thermoplastic polyester, decabromodiphenylethane, a metal oxide or metal sulfide or metal borate or a mixture thereof, an ester of at least one alcohol having at least 3 OH groups and one or more aliphatic mono- or dicarboxylic acids of 5 to 34 carbon atoms. The molding materials are described to be used for the production of moldings, in particular for the electrical and electronics industry.

Capacitor manufacturing generally involves injecting an epoxy potting material. Potting is a method of packaging electronic parts such as devices by covering them with plastic resin. Liquid resin is injected into the case where the device is placed, or viscous resin is dropped directly onto the device and hardened. This method is widely used because the operation is simple and the selection of resin is flexible.

An epoxy potting material is also used in the manufacture of DC inverter capacitors such as the present invention. Therefore, the adhesion of the capacitor housing to the epoxy potting material is important. In other words, the capacitor housing must secure a high level of adhesive strength and strength retention to the molding fluid (epoxy) to protect the capacitor from internal moisture and ensure insulation. However, in the case of polybutylene terephthalate (PBT)-based materials, there are limits to improving epoxy adhesion, hydrolysis resistance is poor, and it is difficult to secure high dimensional stability. In addition, there was a problem in ensuring high dimensional stability by prescribing a large amount of minerals, making it difficult to include a high content of filler because the viscosity of polybutylene terephthalate (PBT) resin is higher than that of polyphenylene sulfide (PPS) resin.

Therefore, there is a need for the development of a polyester resin composition for capacitor housing that has excellent adhesion to epoxy potting materials, excellent dimensional stability, and hydrolysis resistance at the same time.

### SUMMARY OF THE INVENTION

The present disclosure is directed to providing a polyester resin composition with high dimensional stability, excellent adhesion to an epoxy potting agent and excellent hydrolysis resistance, and a molded article for capacitor housing, which is manufactured by molding the same.

In order to solve the above technical problem, as one embodiment of the present invention, provided is a polyester resin composition for capacitor housing, including, based on a total weight of the polyester resin composition, 40 to 50% by weight of polybutylene terephthalate resin; 18 to 20% by weight of acrylic styrene acrylonitrile resin; 25 to 35% by weight of glass fiber; 1 to 3% by weight of epoxy resin; 0.01 to 1% by weight of a carbodiimide-based anti-hydrolysis agent; and 0.01 to 1% by weight of epoxy silane.

In one embodiment, the polybutylene terephthalate resin may have an intrinsic viscosity of 0.80 to 1.00 dl/g.

In one embodiment, the acrylic styrene acrylonitrile resin may have a rubber content of 20 to 60 parts by weight.

In one embodiment, the glass fiber may be flat glass fiber with an average diameter of 30 to 40 µm and a length of 3 to 4 mm.

As another embodiment of the present invention, a molded article for capacitor housing including the polyester resin composition is provided.

In one embodiment, the molded article may have an average coefficient of linear expansion in a range of from 50x10⁻⁶/°C to 55x10⁻⁶/°C as measured by an ISO 11359 test method.

In one embodiment, an initial adhesive strength measured by an ISO 4587 test method may be in a range of from 3.0 to 3.5 MPa.

In one embodiment, the adhesive strength of the molded article measured after 1000 hours under environmental conditions of a temperature of 85 °C and a relative humidity of 85% may be 94% or more of the initial adhesive strength.

In one embodiment, the adhesive strength of the molded article measured after 96 hours under environmental conditions of a temperature of 120 °C and a relative humidity of 100% may be 75% or more of the initial adhesive strength.

In one embodiment, the molded article may have a comparative tracking index (CTI) rating in a range of from 0 to 2, and the 0 to 2 rating may be maintained even after 1000 hours under environmental conditions of a temperature of 85 °C and a relative humidity of 85% or after 96 hours under environmental conditions of a temperature of 120 °C and a relative humidity of 100%.

### DETAILED DESCRIPTION OF EXEMPLARY EMBODIMENTS

Hereinafter, the present invention will be described in more detail with reference to embodiments and drawings. The terms used in the present application are only used to describe specific embodiments and are not intended to limit the present invention. Singular expressions include plural expressions unless the context clearly dictates otherwise. In the present application, it is to be understood that the terms "include(s)" or "have(has)" and the like are intended to specify the presence of stated features, numbers, steps, operations, components, parts or combinations thereof, but do not preclude the presence or addition of one or more other features, numbers, steps, operations, components, parts and combinations thereof.

Unless defined otherwise, all terms used herein, including technical or scientific terms, have the same meaning as commonly understood by one of ordinary skill in the art to which this invention belongs. Terms such as those defined in commonly used dictionaries should be interpreted as having a meaning consistent with its meaning in the context of the related art and should not be interpreted in an ideal or excessively formal meaning unless explicitly defined in the present application.

The polyester resin composition for capacitor housing according to an embodiment of the present invention includes polybutylene terephthalate (PBT) resin and acrylic styrene acrylonitrile (ASA) resin as base resins, glass fiber as a filler, and epoxy resin, a anti-hydrolysis agent, and epoxy silane as additives. A detailed description of each ingredient and material is as follows.

### Polybutylene terephthalate

The polyester resin composition according to an embodiment includes polybutylene terephthalate (PBT) as a crystalline base resin. The polybutylene terephthalate (PBT) resin refers to both a polybutylene terephthalate homopolymer and a polybutylene terephthalate copolymer. The polybutylene terephthalate resin may be manufactured by directly esterifying 1,4-butanediol and terephthalic acid or dimethyl terephthalate, or by transesterification and condensation polymerization.

In addition, for impact strength and surface modification of the polybutylene terephthalate resin, a copolymer obtained by copolymerizing a polybutylene terephthalate polymer with components such as polytetramethylene glycol (PTMG), polyethylene glycol (PEG), polypropylene glycol (PPG), aliphatic polyester, and aliphatic polyamide, or modified polybutylene terephthalate resin, which is a blend composition blended with these components, may also be used.

The polybutylene terephthalate resin that may be used in the polyester resin composition according to an embodiment may have an intrinsic viscosity (η) of 0.80 dl/g to 1.00 dl/g as measured according to ASTM D2857. When the intrinsic viscosity of polybutylene terephthalate (PBT) resin is less than 0.80 dl/g, it may be difficult to secure mechanical properties, and as the flow index of the material increases, the bending characteristics of the injection molded article may increase, or the occurrence of burrs may increase, resulting in unnecessary post-processing. When the intrinsic viscosity exceeds 1.00 dl/g, the flow index may decrease, which may result in deterioration of the surface quality of the injection molded article and deterioration of molding processability. When the intrinsic viscosity of the polybutylene terephthalate resin is within the above range, the polyester resin composition including the resin can secure fluidity, and thus may secure moldability for large molded articles with complex structures.

The polyester resin composition for capacitor housing includes 40 to 50% by weight of polybutylene terephthalate (PBT) resin based on the total weight of the resin composition. When the content of the polybutylene terephthalate (PBT) resin is less than 40% by weight, there is a problem that mechanical strength decreases, and when the polybutylene terephthalate (PBT) resin content exceeds 50% by weight, the dimensional stability of the injection molded article may decrease.

The polybutylene terephthalate has excellent overall physical properties such as fluidity and surface smoothness compared to other resins and has excellent moldability for complex structures. In addition, excellent physical properties may be secured compared to the case of using polybutylene terephthalate resin mixed with other polyester resins.

### Acrylonitrile-styrene-acrylate

The polyester resin composition according to an embodiment includes an acrylonitrile-styrene-acrylate (ASA) copolymer as amorphous base resin.

The acrylonitrile-styrene-acrylate (ASA) copolymer is a terpolymer of styrene, acrylonitrile, and acrylate rubber. The acrylonitrile-styrene-acrylate (ASA) copolymer may be a graft-blend type copolymer, and acrylate rubber may be copolymerized at a proportion of 20 to 60% by weight based on the total weight of the copolymer. When the proportion of acrylate rubber included in the ASA copolymer is less than 20% by weight, the impact strength of the entire resin may be lowered, and when the proportion exceeds 50% by weight, tensile strength and the heat deflection temperature (HDT) may decrease due to an increase in the flow index.

When acrylonitrile-styrene-acrylate is included in the polyester resin composition, an effect of improving the specific gravity, dimensional stability, heat resistance stability, and weather resistance of the resin composition may be obtained. In addition, the polyester resin composition may maintain glossiness due to the inclusion of the acrylonitrile-styrene-acrylate (ASA) resin and has excellent molding processability, which is advantageous in that it may be applied to various molding methods such as injection, extrusion, and calendar processing.

The polyester resin composition for capacitor housing includes 18 to 20% by weight of the acrylonitrile-styrene-acrylate (ASA) copolymer based on the total weight of the resin composition. When the content of the acrylonitrile-styrene-acrylate (ASA) copolymer is less than 18 parts by weight, the dimensional stabilization effect cannot be achieved, and when the content of the acrylonitrile-styrene-acrylate (ASA) copolymer exceeds 20 parts by weight, the crystallization temperature of the material may decrease, which may result in poor injection molding release and a decrease in the mechanical strength and heat deflection temperature (HDT) of the molded body.

### Filler

In the polyester resin composition according to an embodiment, flat glass fiber is used as a filler. The glass fiber that may be used may have an average diameter of 30 to 40 µm and a length of 3 to 4 mm. Using flat glass fiber in the above range may improve the dimensional stability of molded articles by improving GF bias.

The flat glass fiber used as the filler is used in an amount of 25% to 35% by weight based on the entire polyester resin composition for capacitor housing. When the filler content is less than the above range, there are problems such as reduced mechanical strength, increased bending characteristics of the injected molded article, and reduced dimensional stability, and when the content exceeds the above range, mechanical properties increase, but there is a problem of poor processability due to a decrease in molding shrinkage.

### Epoxy resin

The epoxy resin according to an embodiment may be a solid bisphenol A epoxy resin having a medium molecular weight level.

Bisphenol A epoxy resin reacts with the ethylene backbone of polybutylene terephthalate (PBT) base resin to form a bond, thereby strengthening adhesion to epoxy and improving hydrolysis resistance. For example, bisphenol A epoxy resin having an epoxy equivalent weight (EEW) in a range of 900 to 1,950 g/eq may be used.

The epoxy resin used as an additive is used in a range of 1% by weight to 3% by weight based on the entire polyester resin composition for capacitor housing. When the content of the epoxy resin is less than the above range, there is a problem that adhesion to the epoxy and hydrolysis resistance may be reduced, and when the content exceeds the above range, there is a problem that the mechanical properties may be reduced.

### Anti-hydrolysis agent

The polyester resin composition according to an embodiment may have improved hydrolytic stability through end capping by introducing an additive having a carbodiimide bond.

A carbodiimide-based compound that is used as the anti-hydrolysis agent may be a monomer type or a polymer type, and a combination of the monomer type and polymer type may be used depending on the purpose of use of the resin composition. In the monomer type, one molecule of the carbodiimide-based compound reacts with the end group of the polyester to provide hydrolysis resistance, and in the polymer type, the end group of the carbodiimide-based compound reacts with the end group of the polyester.

Specific examples of the carbodiimide-based compound include N,N'-di-o-tolyl carbodiimide, N,N'-diphenyl carbodiimide, N,N'-dioctyldecyl carbodiimide, N,N'-di-2,6-diketylphenyl carbodiimide, N-tolyl-N'-cyclohexyl carbodiimide, N,N'-di-2,6-diisopropylphenyl carbodiimide, N,N'-di-2,6-di-tertiary-butylphenyl carbodiimide, N-tolyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-di-cyclohexyl carbodiimide, N,N'-di-p-tolyl carbodiimide, p-phenylene-bis-di-o-tolyl carbodiimide, p-phenylene-bisdicyclohexyl carbodiimide, hexamethylene-bisdicyclohexyl carbodiimide, ethylene-bisdiphenyl carbodiimide, a benzene-2,4-diisocyanato-1,3,5-tris(1-methylethyl) homopolymer, and a copolymer of 2,4-diisocyanato-1,3,5-tris(1-methylethyl) and 2,6-diisopropyl diisocyanate, among which one or more types may be selected and used as the anti-hydrolysis agent.

The anti-hydrolysis agent is used in an amount of 0.01% to 1% by weight based on the entire polyester resin composition for capacitor housing. When the content of the anti-hydrolysis agent is less than the above range, the effect of inhibiting hydrolysis is minimal, and when the content exceeds the above range, the physical properties of the resin composition may be affected without further increasing hydrolysis resistance.

### Epoxy silane

In order to improve adhesion to the epoxy potting material used to manufacture the capacitor housing, the polyester resin composition includes epoxy silane as an additive.

The epoxy silane used as an additive may be a silane coupling agent with an epoxy group or a glycidyl group, and may include 3-glycidoxypropylmethyldiethoxysilane, 3-glycidoxypropyltrimethoxysilane, 2-(3,4-epoxycyclohexyl)ethyltrimethoxysilane, 3-glycidoxypropyltriethoxysilane, and the like, among which one or more types may be selected and used.

The epoxy silane used as an additive is used in a range of 0.01% by weight to 1% by weight based on the entire polyester resin composition for capacitor housing. When the content of the epoxy silane is less than the above range, the effect of improving adhesion to the epoxy potting material is minimal, and when the content exceeds the above range, the viscosity of the material increases, which may cause problems with injection processability and surface quality of the injection molded article.

### Example 1: Preparation of polyester resin composition

To prepare a resin composition for capacitor housing, polybutylene terephthalate (PBT) resin was prepared as crystalline base resin and acrylic styrene acrylate (ASA) resin was prepared as an amorphous base resin to improve dimensional stability, as follows.

**[Table 1]**

| Classification | Grade | Vendor | Characteristics | Remarks |
|---|---|---|---|---|
| PBT | 1200-211M | CHANG CHUN | IV 0.83 | |
| ASA | LI912 | LG CHEM | MI 12 | 220 °C, 10 kg |

In addition, dimensional stability was improved through improvement in GF bias by using flat glass fiber as a filler.

**[Table 2]**

| Classification | Grade | Vendor | Characteristics | Remarks |
|---|---|---|---|---|
| Glass Fiber | ECS03 952 EW | NEG | Diameter of 30 to 40 µm, Chopped length of 3 to 4 mm | Flat glass fiber |

Additionally, epoxy resin, epoxy silane, and an anti-hydrolysis agent were used as additives. Epoxy resin and epoxy silane serve to increase adhesion to the epoxy potting material used to manufacture capacitor housing and improve hydrolysis properties.

Additionally, a carbodiimide-based compound was used as an anti-hydrolysis agent to improve the hydrolysis properties of the capacitor housing.

**[Table 3]**

| Classification | Grade | Vendor | Characteristics | Remarks |
|---|---|---|---|---|
| Bis Phenol A Epoxy Resin | YD-014 | Kukdo Chemical Company | EEW (equivalent weight) of 900 to 1,000 g/eq | |
| Anti-hydrolysis agent | Stabaxol P | LANXESS | Carbodiimide | |

Using the materials prepared as above, a resin composition was prepared by uniformly mixing each material according to the weight percentage shown in Table 4 below.

**[Table 4]**

| | Classificatio n | Components | Characteristics | Content |
|---|---|---|---|---|
| Example 1 | Base resin | PBT | Crystalline base resin | 40 to 50% |
| | | ASA | Amorphous base resin (Dimensional stability) | 18 to 20% |
| | Filler | Flat Glass Fiber | Flat Glass Fiber (Dimensional stability through improvement in GF bias) | 30% |
| | Additives | Bisphenol A epoxy Resin | Increased adhesion to epoxy and improved hydrolysis properties | 1 to 3% |
| | | Anti-hydrolysis agent | Improved hydrolysis properties | < 1% |
| | | Silane (Epoxy silane) | Increased adhesion to epoxy | < 1% |

### Comparative Example 1

A resin composition for capacitor housing was prepared using modified polyphenylene oxide (MPPO)-based resin instead of PBT as the base resin.

### Comparative Example 2

A resin composition for capacitor housing was prepared without using an anti-hydrolysis additive.

### Test Example 1: Evaluation of physical properties of molded articles

Molded articles were manufactured using the polyester resin composition prepared in Example 1 and the resin compositions of Comparative Examples 1 and 2, and the coefficient of linear expansion, flexural strength, and flexural modulus were measured, and the test results are listed in Table 5 below.

The coefficient of linear expansion was measured in a temperature range of - 40 to 110 °C under ISO 11359 conditions.

**[Table 5]**

| | | Coefficient of linear expansion (10⁻⁶/°C) | Flexural strength | Flexural modulus |
|---|---|---|---|---|
| Example 1 | Polyester | 52 | 192 | 8,800 |
| Comparative Example 1 | MPPO-based | 36 | 110 | 11,000 |
| Comparative Example 2 | PBT-based | 62 | 167 | 8,570 |

### Test Example 2: Epoxy adhesion evaluation

Molded articles were manufactured using the polyester resin composition prepared in Example 1 and the resin compositions of Comparative Examples 1 and 2, and epoxy adhesion was evaluated under harsh durability conditions, and the test results are listed in Table 6 below.

**[Table 6]**

| | Initial (MPa) | Thermal shock | Leave at low temperatur e | Humidity test | HAST High temperatur e and high humidity | Thermal shock (harsh) |
|---|---|---|---|---|---|---|
| | | 105 °C (1hr) ↔ - 40 °C / 750 cycles | -40 °C 1,000 hr | 85%/85% RH 1000 hr | 120 °C, 100% RH, 96 hr | -40 °C ↔ 150 °C, 500 cycles |
| Example 1 | 3.2 | 4.2 (117%) | 3.9 (122%) | 3.0 (94%) | 2.4 (75%) | 4.1 (128%) |
| Comparativ e Example 1 | 2.3 | 3.2 (139%) | 2.9 (126%) | 1.4 (82%) | 1.7 (75%) | 2.7 (117%) |
| Comparativ e Example 2 | 2.9 | 3.5 (121%) | 3.6 (124%) | 1.6 (55%) | 0.7 (23%) | 3.0 (103%) |

### Test Example 3: Insulation (withstand voltage) evaluation

Molded articles were manufactured using the polyester resin composition prepared in Example 1 and the resin compositions of Comparative Examples 1 and 2, and after being left in a high temperature/high humidity environment for a long time, hydrolysis resistance was evaluated by measuring changes in physical properties. Specifically, flexural strength, flexural modulus, and insulation (CTI, withstand voltage) were measured after 1000 hr in an 85 °C/85% RH environment.
- Flexural strength: Follows the evaluation method specified in ISO 178, a test piece size is 80 X 10 X 4 mm, a span length is 64 mm, a test speed is 2 mm/min, and units are MPa.
- Flexural modulus: Follows the evaluation method specified in ISO 178, a test piece size is 80 X 10 X 4 mm, a span length is 64 mm, a test speed is 2 mm/min, and units are MPa.
- Withstand voltage verification: Verification of insulation breakdown at the beginning and after leaving at 3 kV for 1 minute after high temperature/high humidity.

**[Table 7]**

| | | Initial | | | | High temperature/high humidity (85 °C/85% RH, 1,000 hr) | | | |
|---|---|---|---|---|---|---|---|---|---|
| | | Flexur al strengt h | Flexura I modulu s | CTI | Withstan d voltage | Flexur al strengt h | Flexura I modulu s | CTI | Withstan d voltage |
| Example 1 | Polyest er | 170 | 8,280 | 1 PLC (500V ) | OK | 160 | 8,240 | 1 PLC (500V ) | OK |
| Comparati ve Example 1 | MPPO-based | 113 | 11,000 | 3 PLC (200 V) | OK | 109 | 11,400 | 3 PLC (200V ) | OK |

As a result of examining the rate of change in physical properties of the polyester resin composition according to Example 1, after environmental reliability, the flexural property retention rate of the material to be evaluated was 93% or more, maintaining the same level as the initial level. By adding the carbodiimide-based compound used to ensure hydrolysis resistance, it was confirmed that hydrolysis resistance was improved and the physical properties were maintained.

In addition, as a result of comparative tracking index (CTI) verification, the performance level categories (PLC) of the polyester resin composition according to Example 1 was measured to be grade 1, and through this, it can be seen that the insulation performance before and after the environmental reliability test is also excellent.

The capacitor housing manufactured by molding the polyester resin composition according to the present invention has high epoxy adhesion, excellent dimensional stability and hydrolysis resistance, and can also reduce manufacturing costs.

Specifically, the molded article for capacitor housing using the polyester resin composition according to an embodiment of the present invention has high initial adhesive strength with epoxy, has a low rate of change in adhesive strength even in a long-term high temperature and high humidity environment, and exhibits sufficient mechanical properties for application as capacitor housing.

Meanwhile, effects of the present invention are not limited to the effects mentioned above, and other effects not mentioned will be clearly understood by those skilled in the art from the description above.

## Claims

1. A polyester resin composition for capacitor housing, comprising, based on a total weight of the polyester resin composition:
40 to 50% by weight of polybutylene terephthalate resin;
18 to 20% by weight of acrylic styrene acrylonitrile resin;
25 to 35% by weight of glass fiber;
1 to 3% by weight of epoxy resin;
0.01 to 1% by weight of a carbodiimide-based anti-hydrolysis agent; and
0.01 to 1% by weight of epoxy silane.

2. The composition of claim 1, wherein the polybutylene terephthalate resin has an intrinsic viscosity of 0.80 to 1.00 dl/g as measured according to ASTM D2857.

3. The composition of claim 1 or 2, wherein the acrylic styrene acrylonitrile resin has a rubber content of 20 to 60% by weight based on the total weight of the copolymer.

4. The composition of any one of claims 1 to 3, wherein the glass fiber is flat glass fiber with an average diameter of 30 to 40 µm and a length of 3 to 4 mm.

5. A molded article for capacitor housing comprising the polyester resin composition of any one of claims 1 to 4.

6. The molded article of claim 5, wherein the molded article has an average coefficient of linear expansion in a range of from 50x10⁻⁶/°C to 55x10⁻⁶/°C as measured by an ISO 11359 test method.

7. The molded article of claim 5 or 6, wherein the molded article has an initial adhesive strength in a range of from 3.0 to 3.5 MPa as measured by an ISO 4587 test method.

8. The molded article of any one of claims 5 to 7, wherein an adhesive strength of the molded article measured after 1000 hours under environmental conditions of a temperature of 85 °C and a relative humidity of 85% is 94% or more of an initial adhesive strength.

9. The molded article of any one of claims 5 to 8, wherein an adhesive strength of the molded article measured after 96 hours under environmental conditions of a temperature of 120 °C and a relative humidity of 100% is 75% or more of an initial adhesive strength.

## Patentansprüche

1. Polyesterharzzusammensetzung für Kondensatorgehäuse, umfassend, bezogen auf das Gesamtgewicht der Polyesterharzzusammensetzung
40 bis 50 Gew.-% Polybutylenterephthalat-Harz;
18 bis 20 Gew.-% Acryl-Styrol-Acrylnitril-Harz;
25 bis 35 Gew.-% Glasfasern;
1 bis 3 Gewichtsprozent Epoxidharz;
0,01 bis 1 Gewichtsprozent eines Anti-Hydrolyse-Mittels auf Carbodiimid-Basis; und
0,01 bis 1 Gew.-% eines Epoxysilans.

2. Zusammensetzung nach Anspruch 1, wobei das Polybutylenterephthalatharz eine intrinsische Viskosität von 0,80 bis 1,00 dl/g, gemessen nach ASTM D2857, aufweist.

3. Zusammensetzung nach Anspruch 1 oder 2, wobei das Acryl-Styrol-Acrylnitril-Harz einen Kautschukgehalt von 20 bis 60 Gew.-%, bezogen auf das Gesamtgewicht des Copolymers, aufweist.

4. Zusammensetzung nach einem der Ansprüche 1 bis 3, wobei die Glasfaser eine Flachglasfaser mit einem durchschnittlichen Durchmesser von 30 bis 40 µm und einer Länge von 3 bis 4 mm ist.

5. Formteil für ein Kondensatorgehäuse, der die Polyesterharzzusammensetzung nach einem der Ansprüche 1 bis 4 enthält.

6. Formteil nach Anspruch 5, wobei das Formteil einen durchschnittlichen linearen Ausdehnungskoeffizienten in einem Bereich von 50x10⁻⁶/°C bis 55x10⁻⁶/°C, gemessen nach einem ISO 11359-Testverfahren, aufweist.

7. Formteil nach Anspruch 5 oder 6, wobei der geformte Gegenstand eine Anfangsklebkraft im Bereich von 3,0 bis 3,5 MPa, gemessen mit einem ISO 4587-Testverfahren, aufweist.

8. Formteil nach einem der Ansprüche 5 bis 7, wobei die Klebkraft des geformten Gegenstands, gemessen nach 1000 Stunden unter Umgebungsbedingungen mit einer Temperatur von 85 °C und einer relativen Luftfeuchtigkeit von 85 %, 94 % oder mehr der anfänglichen Klebkraft beträgt.

9. Formteil nach einem der Ansprüche 5 bis 8, wobei die Klebkraft des geformten Gegenstands, gemessen nach 96 Stunden unter Umgebungsbedingungen mit einer Temperatur von 120 °C und einer relativen Luftfeuchtigkeit von 100 %, 75 % oder mehr der anfänglichen Klebkraft beträgt.

## Revendications

1. Composition de résine polyester pour boîtier de condensateur, comprenant, par rapport au poids total de la composition de résine polyester :
40 à 50 % en poids de résine de poly(téréphtalate de butylène) ;
18 à 20 % en poids de résine acrylique styrène acrylonitrile ;
25 à 35 % en poids de fibre de verre ;
1 à 3 % en poids de résine époxy ;
0,01 à 1 % en poids d'un agent anti-hydrolyse à base de carbodiimide ; et
0,01 à 1 % en poids d'époxy silane.

2. Composition selon la revendication 1, dans laquelle la résine de poly(téréphta-late de butylène) présente une viscosité intrinsèque de 0,80 à 1,00 dl/g, telle que mesurée selon la norme ASTM D2857.

3. Composition selon la revendication 1 ou 2, dans laquelle la résine acrylique styrène acrylonitrile présente une teneur en caoutchouc de 20 à 60 % en poids, par rapport au poids total du copolymère.

4. Composition selon l'une quelconque des revendications 1 à 3, dans laquelle la fibre de verre est une fibre de verre plate d'un diamètre moyen de 30 à 40 µm et d'une longueur de 3 à 4 mm.

5. Article moulé pour boîtier de condensateur comprenant la composition de résine polyester selon l'une quelconque des revendications 1 à 4.

6. Article moulé selon la revendication 5, dans lequel l'article moulé présente un coefficient de dilatation linéaire moyen compris entre 50 x 10⁻⁶/ °C et 55 x 10⁻⁶/ °C, tel que mesuré selon la méthode d'essai de la norme ISO 11359.

7. Article moulé selon la revendication 5 ou 6, dans lequel l'article moulé présente une force d'adhérence initiale comprise entre 3,0 et 3,5 MPa, telle que mesurée selon la méthode d'essai de la norme ISO 4587.

8. Article moulé selon l'une quelconque des revendications 5 à 7, dans lequel une force d'adhérence de l'article moulé mesurée après 1 000 heures dans les conditions environnementales d'une température de 85 °C et d'une humidité relative de 85 % est supérieure ou égale à 94 % de la force d'adhérence initiale.

9. Article moulé selon l'une quelconque des revendications 5 à 8, dans lequel une force d'adhérence de l'article moulé mesurée après 96 heures dans les conditions environnementales d'une température de 120 °C et d'une humidité relative de 100 % est supérieure ou égale à 75 % de la force d'adhérence initiale.
